# FASCICULE DE BREVET EUROPEEN

(11) **EP 3 956 224 B1**
(45) Date de publication et mention de la délivrance du brevet: **25.01.2023**
(21) Numéro de dépôt: 20719963.9
(22) Date de dépôt: 08.04.2020
(51) Int. Cl.: B64D 29/00, B64D 33/02, F02K 1/66, B64C 23/06, F02C 7/042

(54) **TURBOREACTEUR COMPRENANT UNE NACELLE AVEC UNE ENTRÉE D'AIR POUR FAVORISER UNE PHASE D'INVERSION DE POUSSEE**
TURBOFANTRIEBWERK UMFASSEND EINER GONDEL MIT EINEM LUFTEINLASS UM EINE SCHUBUMKEHRPHASE ZU BESSERN
TURBOREACTOR COMPRISING A NACELLE WITH AN AIR INTAKE FOR IMPROVING A REVERSE THRUST

(30) Priorité: 17.04.2019 FR 1904087
(43) Date de publication de la demande: 23.02.2022
(73) Titulaire: SAFRAN AIRCRAFT ENGINES, 75015 Paris (FR)
(72) Inventeur: MINCU, Daniel-Ciprian, 77550 MOISSY-CRAMAYEL (FR); LECORDIX, Jean-Loïc, Hervé, 77550 MOISSY-CRAMAYEL (FR); SIRVIN, Nicolas, Joseph, 77550 MOISSY-CRAMAYEL (FR); DAUTREPPE, Frédéric, 77550 MOISSY-CRAMAYEL (FR); BINDER, Anthony, 77550 MOISSY-CRAMAYEL (FR); LEBEAULT, Eva, Julie, 77550 MOISSY-CRAMAYEL (FR)
(74) Mandataire: Argyma
(86) Numéro de dépôt international: PCT/EP2020/060028
(87) Numéro de publication internationale: WO 2020/212224

(56) Documents cités:
- EP-A1- 3 002 210
- EP-A2- 0 516 468
- GB-A- 1 252 193
- GB-A- 1 565 212
- US-A- 3 736 750
- US-A1- 2018 100 434
- US-B1- 6 655 632

## Description

### DOMAINE TECHNIQUE DE L'INVENTION

La présente invention concerne le domaine des turboréacteurs d'aéronef et vise plus particulièrement une entrée d'air d'une nacelle d'un turboréacteur d'aéronef.

De manière connue, un aéronef comporte un ou plusieurs turboréacteurs pour permettre sa propulsion par accélération d'un flux d'air qui circule d'amont en aval dans le turboréacteur.

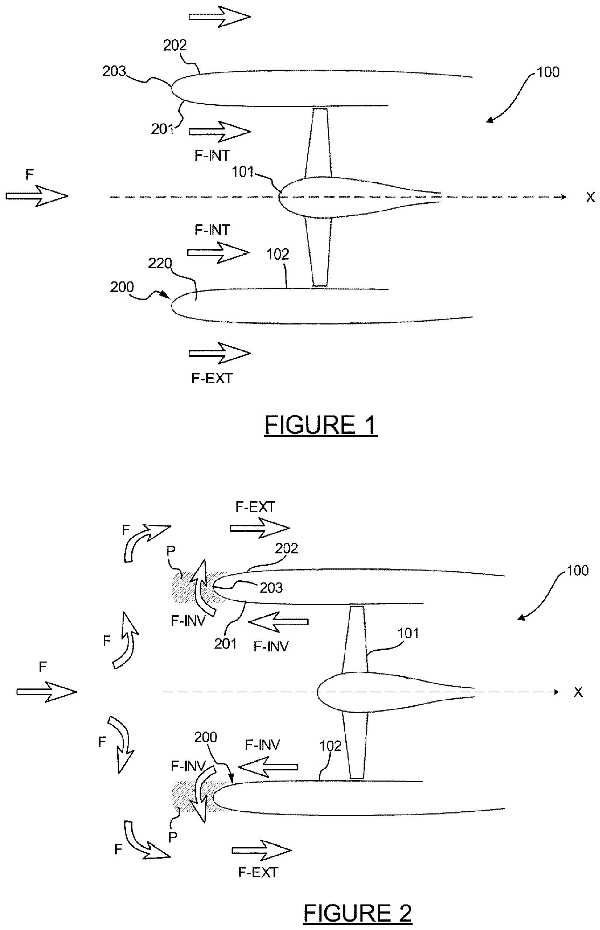

En référence à la figure 1, il est représenté un turboréacteur 100 s'étendant selon un axe X et comportant une soufflante 101 montée rotative autour de l'axe X dans une virole extérieure 102 afin d'accélérer, lors d'une phase de poussée du turboréacteur 100, un flux d'air circulant d'amont vers l'aval dans le turboréacteur 100, dit flux d'air intérieur F-INT. Par la suite, les termes « amont » et « aval » sont définis par rapport à la circulation du flux d'air intérieur F-INT.

De manière connue, le turboréacteur 100 comprend une nacelle comportant à son extrémité amont une entrée d'air 200 comportant une paroi intérieure 201 tournée vers l'axe X et une paroi extérieure 202 opposée à la paroi intérieure 201. Les parois 201, 202 sont reliées par une lèvre d'entrée d'air 203, comprenant un bord d'attaque, de manière à former une cavité annulaire 220. L'entrée d'air 200 possède un profil aérodynamique qui permet de séparer un flux d'air amont F en le flux d'air intérieur F-INT guidé par la paroi intérieure 201 et un flux d'air extérieur F-EXT guidé par la paroi extérieure 202. Par la suite, les termes « intérieur » et « extérieur » sont définis radialement par rapport à l'axe X du turboréacteur 100.

Pour réduire la distance de freinage d'un aéronef, notamment lors de l'atterrissage, il est connu d'intégrer dans une nacelle un système d'inversion de poussée qui permet de modifier l'orientation du flux d'air à l'échappement de manière à réaliser une phase d'inversion de poussée. De manière connue, la phase d'inversion de poussée est réalisée par une ouverture de trappes et/ou grilles dans la veine secondaire, en aval des raidisseurs, afin de reconduire le flux d'air vers l'extérieur de manière radiale par rapport à l'axe X ou vers l'amont.

Pour un turboréacteur à fort taux de dilution, la nacelle possède un diamètre important et il n'est pas souhaité d'intégrer un système d'inversion de poussée classique étant donné que cela pénaliserait de manière importante la masse, l'encombrement et la trainée du turboréacteur.

Pour permettre une phase d'inversion de poussée, une autre solution consiste à prévoir une soufflante à pas variable, connue sous son abréviation anglaise « Variable Pitch Fan » ou VPF de manière à permettre d'inverser le flux d'air circulant dans la veine secondaire d'un turboréacteur et ainsi créer une phase d'inversion de poussée permettant la décélération de l'aéronef lors de l'atterrissage ou lors de toutes autres manoeuvres.

En référence à la figure 2, lors d'une phase d'inversion de poussée, un flux d'air inverse F-INV circule d'aval en amont dans le turboréacteur 100, c'est-à-dire, inversement au flux d'air intérieur F-INT de la figure 1. Plus précisément, le flux d'air inverse F-INV circule au voisinage de la virole extérieure 102 puis est guidé vers l'amont par la paroi intérieure 201 dans une direction sensiblement axiale par rapport à l'axe X. Ce flux d'air inverse F-INV s'oppose alors au flux d'air amont F, ce qui permet la phase d'inversion de poussée.

En pratique, comme illustré à la figure 2, une partie du flux d'air inverse F-INV contourne le profil aérodynamique de l'entrée d'air 200 selon une direction sensiblement radiale, ce qui entraîne l'apparition d'une zone de dépression locale P au voisinage de la lèvre d'entrée d'air 203. Une telle dépression locale P génère une aspiration vers l'amont, c'est-à-dire, une force qui s'oppose à la phase d'inversion de poussée. Dans les faits, ce phénomène réduit la phase d'inversion de poussée de manière très importante.

L'invention vise ainsi à réduire ce phénomène afin d'augmenter les performances du turboréacteur lors de la phase d'inversion de poussée sans affecter les performances dudit aéronef lors de la phase de poussée, c'est-à-dire en configuration de flux non-inversé.

On connaît dans l'art antérieur par les demandes de brevet EP3421373A1 et US3770228A1 une entrée d'air comprenant un ou plusieurs organes pivotants vers l'extérieur pour éviter un décollement du flux d'air intérieur de la paroi intérieure en conditions de fonctionnement défavorables, notamment, lors du décollage. De tel organes ne favorisent pas la phase d'inversion de poussée.

On connaît également par la demande de brevet US3736750A1 une entrée d'air comprenant des portions d'anneau mobiles entre une position de croisière, de décollage et d'atterrissage, afin de réduire le bruit émis.

Dans le domaine éloigné des aéroglisseurs, il est par ailleurs connu par la demande de brevet GB1565212A une hélice montée dans un carénage dont la forme de l'extrémité amont est modifiable grâce à un organe gonflable.

### PRESENTATION DE L'INVENTION

L'invention concerne une entrée d'air d'une nacelle de turboréacteur d'aéronef s'étendant selon un axe X orienté de l'amont vers l'aval dans lequel circule un flux d'air intérieur de l'amont vers l'aval lors d'une phase de poussée et un flux d'air inverse de l'aval vers l'amont lors d'une phase d'inversion de poussée, l'entrée d'air s'étendant de manière circonférentielle autour de l'axe X et comprenant une paroi intérieure tournée vers l'axe X et configurée pour guider le flux d'air intérieur et le flux d'air inverse et une paroi extérieure, opposée à la paroi intérieure et configurée pour guider un flux d'air extérieur, la paroi intérieure et la paroi extérieure étant reliées entre elles par une lèvre d'entrée d'air de manière à former une cavité annulaire.

L'invention est remarquable en ce que l'entrée d'air comprend un dispositif de déviation comprenant au moins un organe de déviation monté mobile entre
- une position déployée, dans laquelle l'organe de déviation s'étend en saillie de la paroi intérieure ou de la lèvre d'entrée d'air selon une direction de déploiement radialement intérieure tournée vers l'axe X ou une direction de déploiement longitudinale par rapport à l'axe X, afin de permettre un décollement du flux d'air inverse de la paroi intérieure pour favoriser la phase d'inversion de poussée, et
- une position escamotée, dans laquelle l'entrée d'air possède un profil aérodynamique de manière à guider le flux d'air intérieur sur la paroi intérieure pour favoriser la phase de poussée.

Grâce à l'invention, le flux d'air inverse est décollé de la paroi intérieure, ce qui permet d'empêcher le flux d'air inverse de contourner la lèvre et de limiter la dépression locale engendrée par rapport à l'art antérieur, et donc la force s'opposant à la poussée inverse induite. En outre, les performances du turboréacteur lors de la phase de poussée ne sont pas réduites. Un déploiement radialement intérieur permet d'agir sur le flux d'air inverse avant qu'il n'entre en contact avec la lèvre d'entrée d'air.

De manière préférée, l'organe de déviation est rigide. Un organe rigide s'oppose à une enveloppe élastique.

Suivant un aspect préféré, la direction de déploiement est orientée vers l'amont, afin de favoriser le décollement sans réduire les forces en jeu du flux d'air inverse. De manière alternative, la direction de déploiement est orientée vers l'aval.

Préférentiellement, la cavité annulaire s'étendant suivant une direction longitudinale X20 sensiblement parallèle à l'axe X et la direction de déploiement formant un angle de déploiement par rapport à la direction longitudinale X20, l'angle de déploiement est compris entre 90° et 140°, afin de favoriser le décollement sans réduire les forces en jeu du flux d'air inverse.

De manière préférée, la direction de déploiement est fonction du niveau d'inversion de poussée souhaité.

Selon un aspect préféré, le dispositif de déviation comprend une pluralité d'organes de déviation répartis à la circonférence de l'entrée d'air autour de l'axe X, afin de réduire la traînée.

De préférence, le dispositif de déviation comprend au moins une rangée comprenant une pluralité d'organes de déviation à une même distance radiale par rapport à l'axe X, afin de générer un décollement sur l'ensemble de la circonférence de l'axe X.

Préférentiellement, le dispositif de déviation comprend une pluralité de rangées comprenant chacune une pluralité d'organes de déviation à une même distance radiale par rapport à l'axe X, afin de favoriser le décollement du flux d'air inverse.

Préférentiellement, les rangées sont circulaires d'axe X.

Préférentiellement, les rangées sont disposées en quinconce de sorte à réduire le poids et la traînée tout en favorisant le décollement du flux d'air inverse sur l'ensemble de la circonférence de l'entrée d'air. De préférence, les organes de déviation se recouvrent partiellement selon la direction azimutale.

Selon un autre aspect préféré, le dispositif de déviation comprend un unique organe de déviation s'étendant de manière circonférentielle autour de l'axe X, assurant un décollement, homogène ou hétérogène, du flux d'air inverse sur l'ensemble de la circonférence de la lèvre d'entrée d'air.

Selon un aspect préféré, au moins un organe de déviation est articulé en rotation entre la position déployée et la position escamotée, permettant de passer facilement et rapidement d'une position à l'autre.

Préférentiellement, la paroi intérieure comprend un logement concave configuré pour recevoir l'organe de déviation en position escamotée, de sorte que l'entrée d'air possède un profil aérodynamique identique à celui de l'art antérieur afin de ne pas réduire les performances du turboréacteur lors de la phase de poussée.

Selon un autre aspect préféré, au moins un organe de déviation est monté mobile en translation selon la direction de déploiement entre la position déployée et la position escamotée, permettant de passer facilement et rapidement d'une position à l'autre.

De manière préférée, au moins un organe de déviation est de forme polygonale ou cylindrique afin de favoriser l'aérodynamisme de la lèvre lors de la phase d'inversion de poussée afin d'augmenter les performances de l'aéronef en phase d'inversion de poussée.

Selon un aspect préféré, le dispositif de déviation comprend au moins un organe de déplacement actif commandable afin de déplacer l'organe de déviation de la position escamotée à la position déployée, de façon simple et rapide.

Préférentiellement, l'organe de déplacement actif commandable déplace l'organe de déviation de la position déployée à la position escamotée, permettant un déplacement d'une position à l'autre dans les deux sens, de façon simple et rapide.

Selon un autre aspect préféré, le dispositif de déviation comprend au moins un organe de déplacement passif configuré pour déplacer l'organe de déviation de la position escamotée à la position déployée sous l'action du flux d'air inverse, ne nécessitant pas une alimentation en énergie supplémentaire à apporter par l'aéronef. L'organe de déviation est autonome.

Préférentiellement, l'organe de déviation est configuré pour être déplacé de la position déployée à la position escamotée sous l'action du flux d'air intérieur, ne nécessitant pas une alimentation en énergie supplémentaire à apporter par l'aéronef.

De manière préférée, le dispositif de déviation comprend un organe de couverture monté mobile entre une position couverte, dans laquelle l'organe de couverture recouvre l'organe de déviation en position escamotée de manière à assurer un profil aérodynamique, et une position découverte, dans laquelle l'organe de couverture est décalé de sa position couverte afin que l'organe de déviation soit en position déployée. L'organe de couverture agit comme un prolongement de la paroi intérieure lors de la phase de poussée, ce qui permet à l'entrée d'air de conserver son profil aérodynamique et ainsi à l'aéronef de ne pas réduire ses performances en phase de poussée.

L'invention est définie par un turboréacteur selon la revendication 1. De manière préférée, la soufflante comporte des aubes à pas variable.

L'invention est en outre définie par un procédé d'utilisation d'un turboréacteur selon la revendication 12.

Une entrée d'air peut ainsi être utilisée de manière performante à la fois lors d'une phase de poussée et lors d'une phase d'inversion de poussée. En outre, l'organe de déviation est déplaçable de manière pratique et rapide. Par ailleurs, le nombre d'organes de déviation, leur forme, leur disposition et leur déplacement permettent au dispositif de déviation de s'adapter à différentes conditions de fonctionnement, telles que le freinage.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en coupe longitudinale d'une nacelle de turboréacteur en phase de poussée, selon l'art antérieur,
La figure 2 est une représentation schématique en coupe longitudinale d'une nacelle de turboréacteur en phase d'inversion de poussée, selon l'art antérieur,
La figure 3 est une représentation schématique en coupe longitudinale d'une nacelle de turboréacteur en phase d'inversion de poussée, selon l'invention,
La figure 4 et
La figure 5 sont une représentation schématique en coupe transversale d'une entrée d'air comprenant un dispositif de déviation comprenant une ou deux rangées,
La figure 6 est une représentation schématique en coupe transversale d'une entrée d'air comprenant un dispositif de déviation avec un organe de déviation circonférentiel,
La figure 7A et
La figure 7B sont une représentation schématique en coupe longitudinale d'une entrée d'air comprenant un dispositif de déviation, selon une première forme de réalisation de l'invention avec organe de déplacement actif, en position déployée et en position escamotée,
La figure 7C et
La figure 7D sont une représentation schématique en coupe longitudinale d'une entrée d'air comprenant un dispositif de déviation, selon une première forme de réalisation de l'invention avec organe de déplacement passif, en position déployée et en position escamotée,
La figure 8A et
La figure 8B sont une représentation schématique en coupe longitudinale d'une entrée d'air comprenant un dispositif de déviation, selon une deuxième forme de réalisation de l'invention, en position déployée et en position escamotée,
La figure 8C est une représentation schématique en coupe longitudinale d'une entrée d'air comprenant un dispositif de déviation en position escamotée avec un autre organe de couverture,
La figure 9A et
La figure 9B sont une représentation schématique en coupe longitudinale d'une entrée d'air comprenant un dispositif de déviation, selon une troisième forme de réalisation de l'invention, en position déployée et en position escamotée,
La figure 10A et
La figure 10B sont une représentation schématique en coupe longitudinale d'une nacelle de turboréacteur permettant une phase d'inversion de poussée hétérogène, selon l'invention, et
La figure 10C est une représentation schématique en coupe transversale d'une entrée d'air permettant une phase d'inversion de poussée hétérogène, selon l'invention.
Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

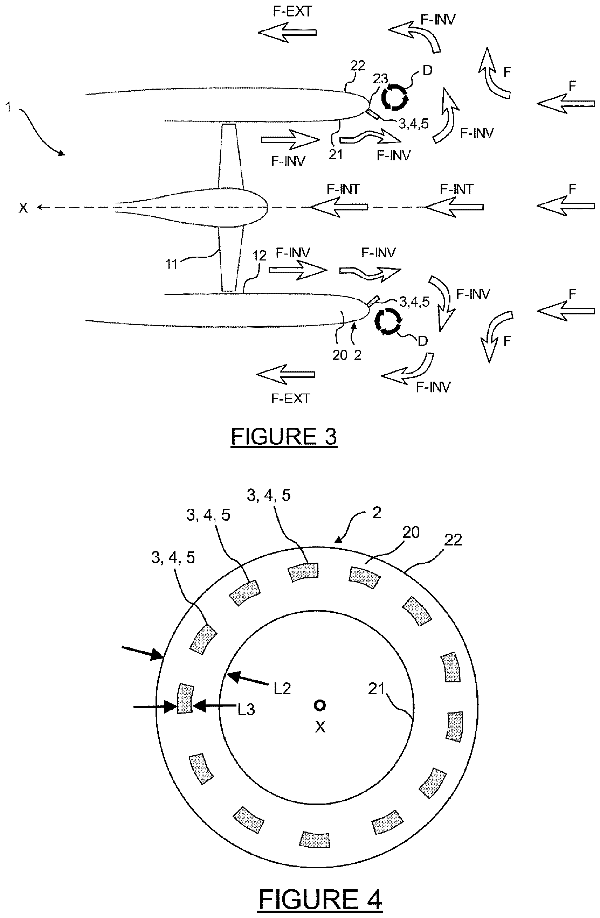

En référence à la figure 3, il est représenté un turboréacteur 1 selon l'invention s'étendant selon un axe X orienté de l'amont vers l'aval et comprenant une soufflante 11 montée rotative autour de l'axe X dans une virole extérieure 12 définissant une veine d'air. De manière connue, la soufflante 11 est configurée, lors d'une phase de poussée, pour accélérer un flux d'air circulant de l'amont vers l'aval dans le turboréacteur 1, dit flux d'air intérieur F-INT, et en phase d'inversion de poussée, pour accélérer un flux d'air circulant de l'aval vers l'amont dans le turboréacteur 1, dit flux d'air inverse F-INV.

En pratique, comme illustré sur la figure 3, le flux d'air inverse F-INV circule d'aval en amont dans une portion radialement extérieure de la veine d'air, en particulier, sur 1/3 du rayon de la veine d'air. Un flux d'air intérieur F-INT circule toujours d'amont en aval dans une portion radialement intérieure de la veine d'air, en particulier, sur 2/3 du rayon de la veine d'air. Le flux d'air intérieur F-INT assure un débit suffisant pour éviter tout phénomène de pompage du turboréacteur.

Comme illustré sur la figure 3, le turboréacteur comprend une nacelle qui comprend à son extrémité amont une entrée d'air 2 s'étendant de manière circonférentielle autour de l'axe X et comprenant une paroi intérieure 21, tournée vers l'axe X et configurée pour guider le flux d'air intérieur F-INT et le flux d'air inverse F-INV, et une paroi extérieure 22, opposée à la paroi intérieure 21 et configurée pour guider un flux d'air extérieur F-EXT. La paroi intérieure 21 et la paroi extérieure 22 sont reliées par une lèvre d'entrée d'air 23 comprenant un bord d'attaque. Les parois 21, 22 et la lèvre d'entrée d'air 23 forment une cavité annulaire 20 s'étendant suivant une direction longitudinale parallèle à l'axe X. Au sein de la cavité annulaire 20 peut notamment être monté un dispositif d'atténuation acoustique ou un dispositif de dégivrage.

Dans cet exemple, le turboréacteur 1 comporte des moyens d'inversion de poussée, en particulier, une soufflante 11 à pas variable, connue sous son abréviation anglaise « Variable Pitch Fan » ou VPF de manière à permettre d'inverser le flux d'air circulant dans le turboréacteur 1 et ainsi de créer une phase d'inversion de poussée permettant la décélération de l'aéronef lors de l'atterrissage, ou lors de toutes autres manoeuvres.

Selon l'invention, en référence à la figure 3, l'entrée d'air 2 comprend un dispositif de déviation comprenant un ou plusieurs organes de déviation 3, 4, 5 montés mobiles entre une position déployée, adaptée pour améliorer l'inversion de poussée, et une position escamotée adaptée pour améliorer la phase de poussée. De manière avantageuse, en position déployée, l'organe de déviation 3, 4, 5 s'étend en saillie de la paroi intérieure 21 ou de la lèvre d'entrée d'air 23 selon une direction de déploiement radialement intérieure tournée vers l'axe X ou une direction de déploiement longitudinale par rapport à l'axe X, afin de permettre un décollement D du flux d'air inverse F-INV de la paroi intérieure 21 pour favoriser la phase d'inversion de poussée comme illustré à la figure 3.

En référence à la figure 3, de manière préférée, en position déployée, l'organe de déviation 3, 4, 5 s'étend en saillie de la paroi intérieure 21 vers l'amont par rapport à l'axe X. De manière avantageuse, l'organe de déviation 3, 4, 5 dévie le flux d'air inverse F-INV guidé par la paroi intérieure 21 afin de générer un décollement D. Autrement dit, l'ensemble du flux d'air inverse F-INV est guidé de manière à circuler suivant une direction sensiblement axiale par rapport à l'axe X afin de s'opposer à un flux d'air amont F, à l'origine de la phase d'inversion de poussée. De préférence, la direction de déploiement formant un angle de déploiement par rapport à la direction longitudinale de la cavité annulaire 20, l'angle de déploiement de l'organe de déviation 3, 4, 5 est compris entre 90° et 140°. Il est ainsi choisi suffisamment faible pour favoriser le décollement D et suffisamment élevé pour ne pas réduire significativement les forces en jeu dans le flux d'air inverse F-INV. Il va cependant de soi que l'angle de déploiement peut être différent, étant fonction du niveau d'inversion de poussée souhaité. En particulier, l'organe de déviation 3, 4, 5 peut également s'étendre en saillie vers l'aval.

Par la suite, il est présenté un unique dispositif de déviation mais il va de soi que l'entrée d'air 2 pourrait comprendre une pluralité de dispositifs de déviation.

En référence à la figure 4, il est représenté un dispositif de déviation comprenant plusieurs organes de déviation 3, 4, 5 qui sont répartis à la circonférence de l'entrée d'air 2 autour de l'axe X de manière à permettre d'améliorer la phase d'inversion de poussée sur l'ensemble de ladite circonférence De manière préférée, en référence à la figure 4, la longueur azimutale d'un organe de déviation 3, 4, 5 est telle que ces surfaces soient peu encombrantes, légères et facilement déployables. Il va de soi que la longueur azimutale peut varier d'un organe de déviation 3, 4, 5 à l'autre, afin de s'adapter à différentes conditions de fonctionnement, telles que le freinage, et notamment de faire face à un flux d'air inhomogène sur la circonférence de la lèvre d'entrée d'air. De manière préférée, l'écartement azimutal entre deux organes de déviation 3, 4, 5 consécutifs est suffisamment faible de sorte que les organes de déviation 3, 4, 5 couvrent un maximum de surface azimutale lorsqu'ils sont déployés, voire qu'ils se recouvrent partiellement en position déployée. De manière préférée, le nombre d'organes de déviation 3, 4, 5 est suffisamment grand pour permettre un décollement D sur l'ensemble de la circonférence de l'entrée d'air 2 et suffisamment faible pour réduire le poids et la traînée.

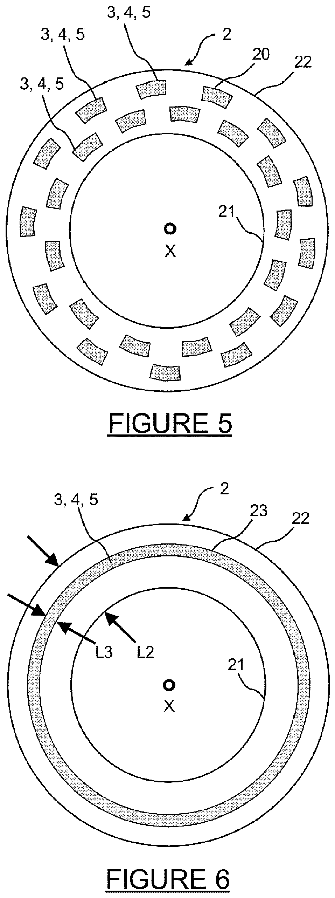

De manière préférée, les organes de déviation 3, 4, 5 sont organisés en rangées. De préférence, chaque rangée comporte une pluralité d'organes de déviation 3, 4, 5 à une même distance radiale par rapport à l'axe X. Autrement dit, une rangée est de forme circulaire. A titre d'exemple, il est représenté une unique rangée circulaire sur la figure 4 et deux rangées circulaires sur la figure 5 mais il va de soi que le nombre de rangées pourrait être plus élevé. L'utilisation de plusieurs rangées, en particulier en quinconce comme illustré à la figure 5, permet de réaliser une déviation sensiblement continue selon la circonférence de l'entrée d'air 2 tout en utilisant des organes de déviation 3, 4, 5 écartés les uns des autres plus simples à maintenir. En particulier, les organes de déviation 3, 4, 5 peuvent se recouvrir partiellement à la manière d'écailles afin de former une continuité de déviation à la circonférence de l'entrée d'air 2.

De manière préférée, en référence à la figure 4, le rapport L3/L2, dans lequel le paramètre L3 est l'épaisseur radiale d'un organe de déviation 3, 4, 5 et le paramètre L2 est l'épaisseur radiale de l'entrée d'air 2, est compris entre 0,05 et 0,3.

De manière alternative, en référence à la figure 6, le dispositif de déviation comprend un unique organe de déviation 3, 4, 5 s'étendant de manière circonférentielle autour de l'axe X. Un tel organe de déviation 3, 4, 5 permet d'assurer une déviation sur l'ensemble de la circonférence de l'entrée d'air 2, lors de la phase d'inversion de poussée.

De manière préférée, les organes de déviation 3, 4, 5 s'étendent au voisinage de la lèvre d'entrée d'air 2 du côté de la paroi intérieure 21 de manière à éviter la formation d'une zone de dépression locale.

De préférence, le matériau d'un organe de déviation 3, 4, 5 est rigide de sorte à améliorer efficacement la phase d'inversion de poussée. Préférentiellement, ce matériau est identique à celui de la paroi intérieure 21 et/ou de la paroi extérieure 22.

L'invention sera mieux comprise lors de la description des différentes formes de réalisation. Les différents aspects de l'invention sont décrits par la suite selon trois formes de réalisation, présentées successivement et uniquement à titre d'exemple. Il va de soi que l'invention ne se limite pas à ces trois formes de réalisation mais englobe toute combinaison possible des différentes caractéristiques techniques des formes de réalisation présentées qui est selon les revendications.

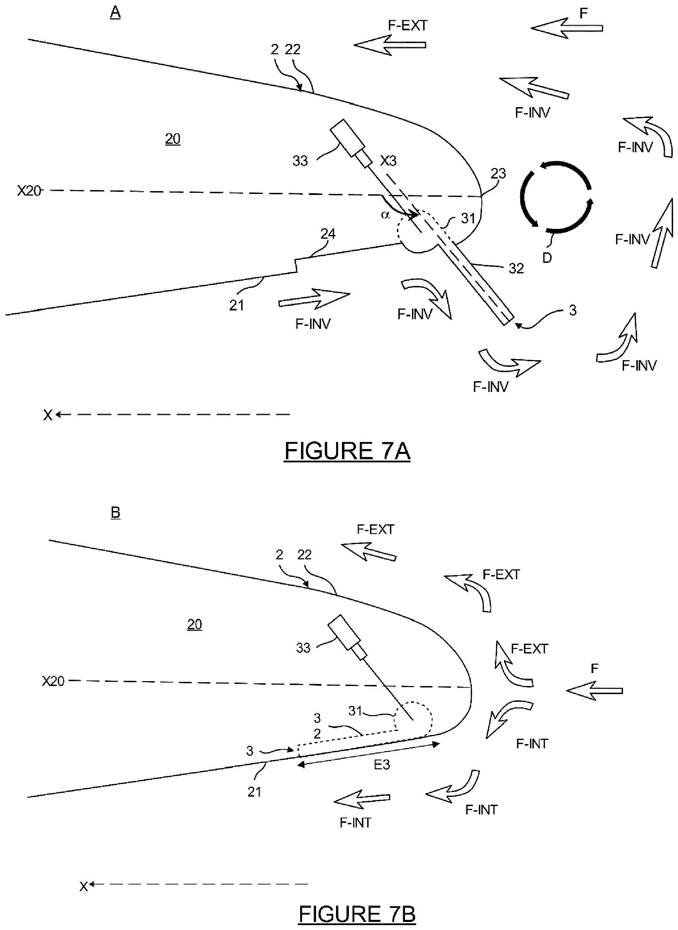

Selon une première forme de réalisation, en référence aux figures 7A et 7B, le dispositif de déviation comprend une rangée comprenant une pluralité d'organes de déviation 3 positionnés à une même distance radiale par rapport à l'axe X. Dans cet exemple, chaque organe de déviation 3 s'étend de la paroi intérieure 21. Par ailleurs, dans cet exemple, chaque organe de déviation 3 comprend une portion proximale 31 articulée en rotation entre la position déployée A et la position escamotée B et une portion distale 32 adaptée pour dévier le flux d'air inverse F-INV.

Dans cet exemple, la portion distale 32 possède une forme rectangulaire mais il va de soi que d'autres formes pourraient convenir, notamment, une forme polygonale telle qu'une forme trapézoïdale. La forme trapézoïdale présente l'avantage qu'avec une seule rangée d'organes de déviation 3 de ce type, les portions distales permettent de coopérer ensemble pour couvrir de manière continue ou sensiblement continue la circonférence de l'entrée d'air. Le flux d'air est dévié sur l'ensemble de la circonférence de l'entrée d'air. Autrement dit, une disposition des organes de déviation 3 en quinconce n'est pas nécessaire pour la forme trapézoïdale.

De manière préférée, la soufflante 11 comportant des aubes de soufflante, la portion distale 32 possède une longueur E3 inférieure à 1/3 de la longueur des aubes de soufflante. De manière préférée, la portion proximale 31 est articulée au niveau de la paroi intérieure 21 au voisinage de la lèvre d'entrée d'air 23.

Dans cet exemple, comme illustré sur la figure 7A, la paroi intérieure 21 comprend un logement concave 24, situé en amont à l'axe d'articulation par rapport au sens de circulation du flux d'air inverse F-INV et configuré pour recevoir l'organe de déviation 3 en position escamotée B. Comme illustré à la figure 7B, dans la position escamotée B, l'organe de déviation 3 s'étend dans le prolongement de la paroi intérieure 21 afin que l'entrée d'air 2 possède un profil aérodynamique.

Dans l'exemple de la figure 7A, l'angle de déploiement α formé entre la direction longitudinale X20 de la cavité annulaire 20 et la direction de déploiement X3, selon laquelle s'étend l'organe de déviation 3 en position déployée A, est compris entre 90° et 140°. Il est ainsi choisi suffisamment faible pour favoriser le décollement D et suffisamment élevé pour ne pas réduire significativement les forces en jeu dans le flux d'air inverse F-INV. Son positionnement radialement intérieur permet d'agir directement sur le flux d'air inverse F-INV, ce qui est avantageux.

Comme illustré à la figure 7A, en position déployée A, le flux d'air inverse F-INV généré par la soufflante 11 est guidé par la paroi intérieure 21 puis par la portion distale 32 de l'organe de déviation 3 qui écarte le flux d'air inverse F-INV de la lèvre d'entrée d'air 23 afin de générer un décollement D. La dépression locale présentée dans l'art antérieur est ainsi réduite, ce qui permet d'améliorer les performances du turboréacteur en phase d'inversion de poussée.

Dans cet exemple, en référence aux figures 7A et 7B, le dispositif de déviation comprend un organe de déplacement actif commandable 33 afin de déplacer l'organe de déviation 3 de la position escamotée B à la position déployée A. A titre d'exemple, cet organe de déplacement actif commandable 33 se présente sous la forme d'un actionneur hydraulique, électrique ou autre afin de permettre un déplacement suite à la réception d'une instruction de commande d'un calculateur. De manière préférée, l'organe de déplacement actif commandable 33 permet également de déplacer l'organe de déviation 3 de la position déployée A à la position escamotée B. De manière alternative, l'organe de déviation 3 peut également être déplacé de la position déployée A à la position escamotée B de manière passive sous l'effet du flux d'air intérieur F-INT lors de la phase de poussée.

Il va de soi que le dispositif de déviation 3 peut comprendre une pluralité d'organes de déplacement actif commandables 33.

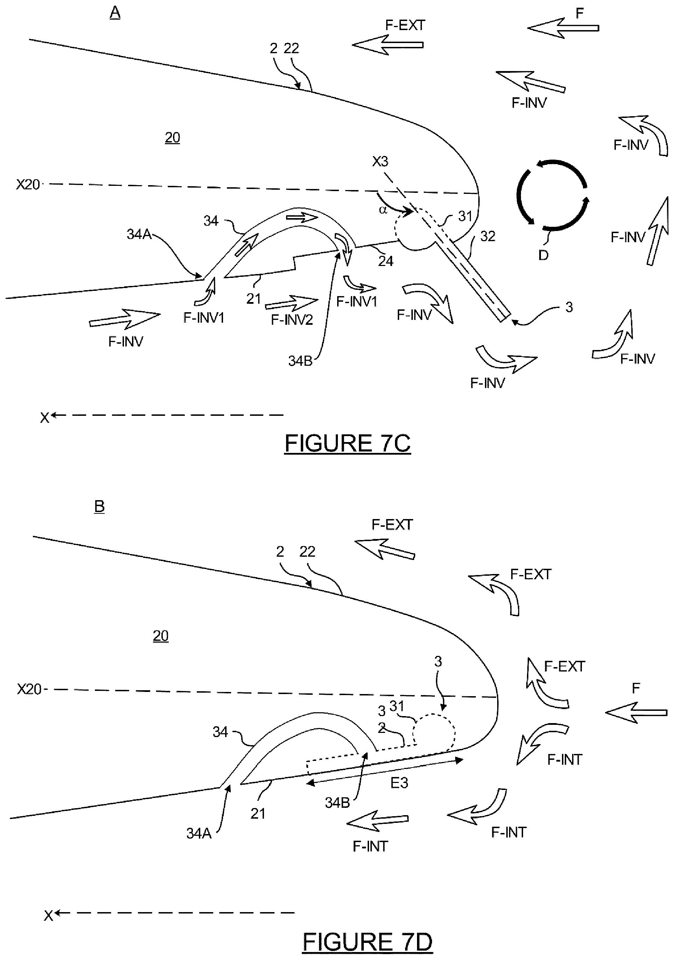

Selon un autre exemple, en référence aux figures 7C et 7D, le dispositif de déviation comprend un organe de déplacement passif 34 afin de déplacer l'organe de déviation 3 de la position escamotée B à la position déployée A sans recourir à un actionneur.

Dans l'exemple des figures 7C et 7D, l'organe de déplacement passif 34 se présente sous la forme d'un conduit formé dans la cavité annulaire 20 de l'entrée d'air 2. De manière préférée, le conduit comprend une entrée 34A débouchant dans la paroi intérieure 21 et une sortie 34B débouchant sur l'organe de déviation 3 en position escamotée B. Plus précisément, l'entrée 34A est située en aval de l'organe de déviation 3 par rapport à l'orientation de l'axe X. L'entrée 34A peut indifféremment être située en amont ou en aval de la soufflante. La sortie 34B débouche quant à elle dans le logement concave 24. De manière avantageuse, le conduit permet de déplacer l'organe de déviation 3 sous l'effet de la force générée par une partie F-INV1 du flux d'air inverse F-INV circulant dans l'organe de déplacement passif 34.

De manière avantageuse, l'organe de déplacement passif 34 ne nécessite pas d'être alimenté en énergie et utilise celle du flux d'air inverse F-INV pour être déplacée en position déployée A lors de la phase d'inversion de poussée et celle du flux d'air intérieur F-INT pour être déplacée en position escamotée B lors de la phase de poussée.

Il va de soi que l'organe de déplacement passif 34 pourrait posséder une structure différente. Il va également de soi qu'un dispositif de déviation peut comprendre une pluralité de d'organes de déplacement passifs 34. Par ailleurs, un dispositif de déviation peut comprendre un ou plusieurs organes de déplacement passifs 34 et un ou plusieurs organes de déplacement actifs commandables 33.

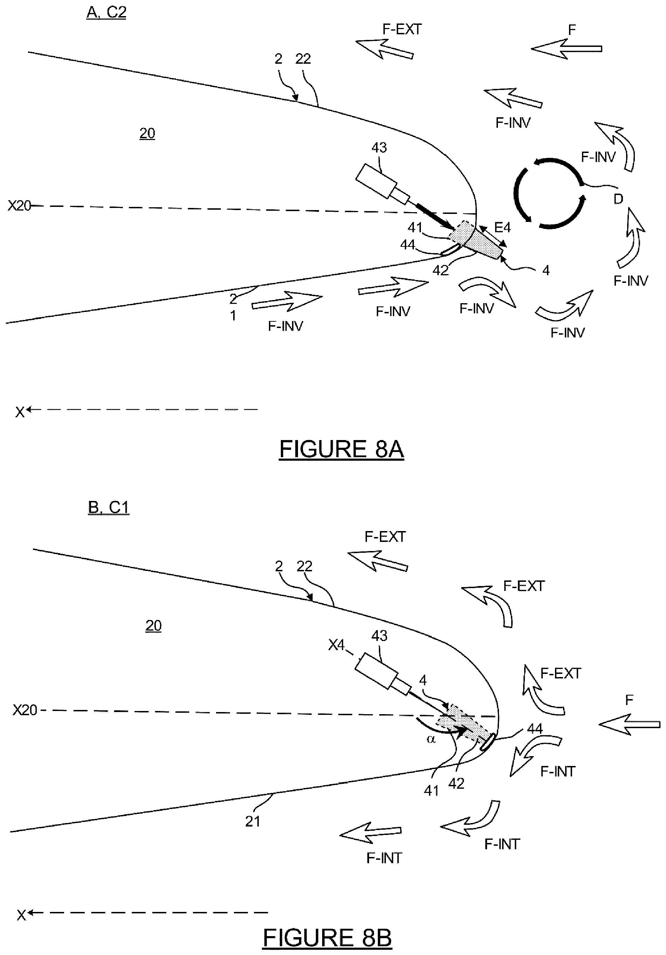

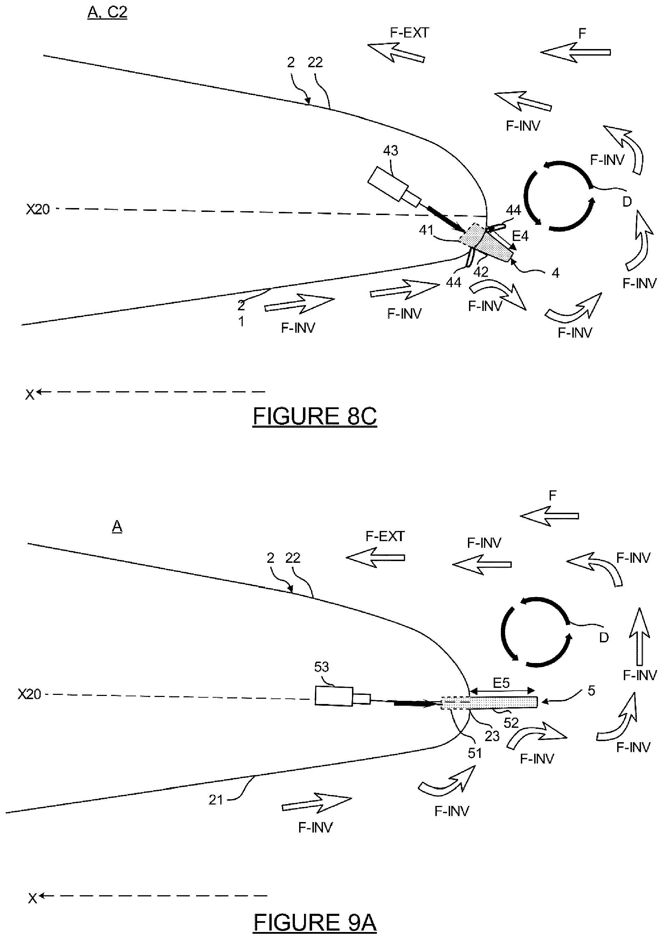

Selon une deuxième forme de réalisation illustrée sur les figures 8A, 8B et 8C, il est représenté plusieurs organes de déviation 4 qui sont déplacés en translation selon la direction de déploiement X4.

De préférence, les organes de déviation 4 possèdent une forme polygonale, de préférence trapézoïdale, afin de posséder une résistance mécanique importante pour s'opposer au flux d'air inverse F-INV. De manière analogue à précédemment, chaque organe de déviation 4 s'étend de la paroi intérieure 21 et possède une partie proximale 41 et une partie distale 42 de déviation d'air. La partie proximale 41 s'étend dans la cavité annulaire 20 tandis que la partie distale 42 s'étend en dehors de la cavité annulaire 20 selon une direction de déploiement X4 radialement intérieure tournée vers l'axe X. De manière préférée, la longueur E4 de la portion distale 42 est inférieure à 1/3 de la longueur des aubes de soufflante.

Selon un autre aspect de l'invention en référence aux figures 8A à 8C, le dispositif de déviation 4 comprend un organe de couverture 44 monté mobile entre une position couverte C1, dans laquelle l'organe de couverture 44 recouvre l'organe de déviation 4 en position escamotée B de manière à assurer un profil aérodynamique (Figure 8B) et une position découverte C2, dans laquelle l'organe de couverture 44 est décalé de sa position couverte C1 (Figures 8A et 8C) afin que l'organe de déviation 4 soit en position déployée A.

De manière préférée, l'organe de couverture 44 est dans un matériau rigide. De préférence, l'organe de couverture 44 est dans un matériau identique à la paroi intérieure 21 et sa forme est choisie de sorte à être dans le prolongement de la paroi intérieure 21 afin que le profil aérodynamique de l'entrée d'air 2 reste inchangé lors de la phase de poussée.

Dans l'exemple de la figure 8A, l'organe de couverture 44 est déplacé en translation le long de la paroi intérieure 21 vers l'intérieur, de la position couverte C1 à la position découverte C2. Dans l'exemple de la figure 8C, l'organe de couverture 44 comprend deux parties positionnées de façon radialement intérieure et radialement extérieure à l'organe de déviation 4 et articulées en rotation vers l'amont de l'entrée d'air 2. Il va cependant de soi que l'organe de couverture 44 pourrait posséder d'autres formes et être déplacé de manière différente. Par ailleurs, l'organe de couverture 44 peut comprendre une ou plusieurs parties. En outre, le déplacement de l'organe de couverture 44 peut être réalisé par un organe de déplacement actif commandable 43 et/ou par un organe de déplacement passif ou encore par tout autre organe de déplacement.

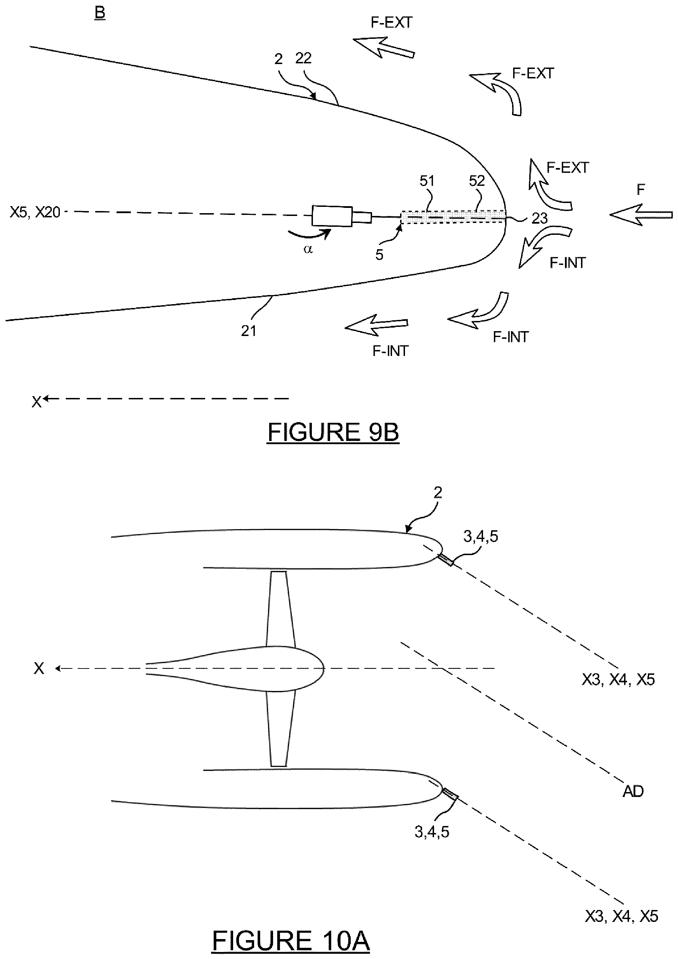

Selon une troisième forme de réalisation illustrée sur les figures 9A et 9B, le dispositif de déviation comprend un unique organe de déviation 5 s'étendant de manière circonférentielle autour de l'axe X. De manière avantageuse, le flux d'air inverse F-INV est dévié sur l'ensemble de la circonférence de l'entrée d'air 2.

Selon un autre aspect de l'invention et comme illustré sur les figures 9A et 9B, l'organe de déviation 5 a une forme cylindrique et s'étend de la lèvre d'entrée d'air 23 selon une direction de déploiement X5 sensiblement longitudinale par rapport à l'axe X. De manière préférée, l'organe de déviation 5 permet de prolonger la lèvre d'entrée d'air 23 et ainsi de réduire son épaisseur, ce qui permet de favoriser un décollement D du flux d'air inverse F-INV. De préférence, l'organe de déviation 5 s'étend sur une longueur E5 inférieure à 1/3 de la longueur des aubes de soufflante.

Il a été décrit trois formes de réalisation particulières de l'invention à titre d'exemple mais il va de soi que l'invention ne se définit pas uniquement via ces formes de réalisation. L'invention englobe en effet toute combinaison possible des différentes caractéristiques techniques des formes de réalisation présentées qui est selon les revendications.

En particulier, les trois formes de réalisation décrites présentent un dispositif de déviation permettant de dévier le flux d'air inverse F-INV de manière homogène à la circonférence de l'entrée d'air 2. Toutefois, dans certaines conditions de fonctionnement, telles que le freinage, il peut être intéressant de dévier ce flux d'air inverse F-INV de manière hétérogène. On décrit ainsi par la suite, en référence aux figures 10A à 10C différents exemples permettant de dévier le flux d'air inverse F-INV de manière hétérogène.

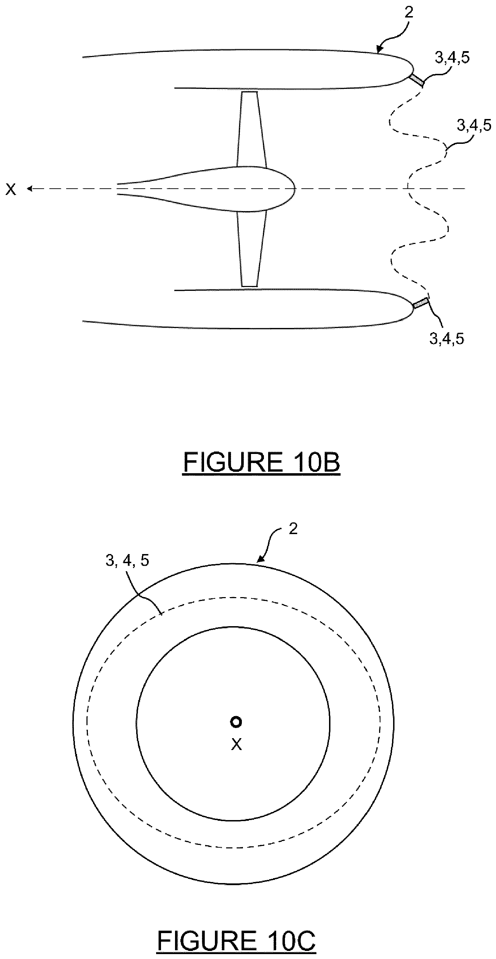

Comme illustré sur la figure 10A, un organe de déviation 3, 4, 5 peut être orienté selon des directions différentes à la circonférence de l'entrée d'air 2 de manière à former une lèvre d'entrée d'air orientée selon un axe de déformation AD prédéterminé. De manière alternative, les organes de déviation 3, 4, 5 peuvent s'étendre selon des longueurs en saillie différentes à la circonférence de l'entrée d'air 2, comme illustré sur la figure 10B. Par ailleurs, en référence à la figure 10C, les organes de déviation 3, 4, 5 peuvent former une rangée de forme elliptique, en particulier ovoïde, sur la circonférence de l'entrée d'air 2, dans un plan transversal à l'axe X. Dans le cas d'un unique organe de déviation 3, 4, 5, celui peut prendre la forme d'une ceinture elliptique dans un plan transversal à l'axe X. Une déviation hétérogène permet avantageusement de guider le flux d'air inverse en tenant compte de l'environnement de l'entrée d'air 2.

On décrit par la suite un procédé d'utilisation de l'entrée d'air 2 selon l'invention précédemment présentée.

Lors de la phase de poussée, la soufflante 11 permet d'accélérer un flux d'air intérieur F-INT qui est guidé par l'entrée d'air 2 ayant un profil aérodynamique favorisant la phase de poussée. L'organe de déviation 3, 4, 5 est en position escamotée B lors de la phase de poussée du turboréacteur 1, afin que l'entrée d'air 2 possède un profil aérodynamique de manière à guider le flux d'air.

Lors d'une phase d'inversion de poussée dudit turboréacteur 1, en particulier suite à une modification du pas des aubes de soufflante 11, le procédé comprend une étape de déplacement de l'organe de déviation 3, 4, 5 de la position escamotée B à la position déployée A, au cours de laquelle, l'organe de déviation 3, 4, 5 est déployé afin de s'étendre en saillie de la paroi intérieure 21 ou de la lèvre d'entrée d'air 23 selon la direction de déploiement X3, X4 radialement intérieure tournée vers l'axe X ou la direction de déploiement X5 longitudinale par rapport à l'axe X, favorisant la phase d'inversion de poussée. De manière avantageuse, cette étape de déplacement octroie à l'aéronef de bonnes performances à la fois en phase de poussée, où le flux d'air intérieur F-INT est conservé inchangé, et en phase d'inversion de poussée, où l'organe de déviation 3, 4, 5 génère un décollement D du flux d'air inverse F-INV de la paroi intérieure 21.

Selon un aspect de l'invention, seule une partie des organes de déviation 3, 4, 5 sont déplacés au cours de l'étape de déplacement pour s'adapter à différentes conditions de fonctionnement, telles que le freinage.

Selon un aspect de l'invention, l'étape de déplacement de l'organe de déviation 3, 4, 5 est réalisée au moyen du dispositif de déplacement actif commandable 33, 43, de manière simple et rapide. Selon un autre aspect de l'invention, l'étape de déplacement de l'organe de déviation 3, 4, 5 est réalisée au moyen du dispositif de déplacement passif 34, utilisant judicieusement la force du flux d'air inverse F-INV pour déplacer l'organe de déviation 3, 4, 5 en position déployée A. De manière préférée, le dispositif de déplacement passif 34 utilise la force du flux d'air intérieur F-INT pour déplacer l'organe de déviation 3, 4, 5 en position escamotée B.

De manière préférée, le procédé d'utilisation comprend une étape de déplacement inverse de l'organe de déviation 3, 4, 5 de la position déployée A à la position escamotée B, au cours de laquelle, l'organe de déviation 3, 4, 5 étant initialement déployé afin de s'étendre en saillie de la paroi intérieure 21 ou de lèvre d'entrée d'air 23 selon la direction de déploiement X3, X4 amont et radialement intérieure tournée vers l'axe X ou la direction de déploiement X5 longitudinale par rapport à l'axe X favorisant la phase d'inversion de poussée, l'organe de déviation 3, 4, 5 est déplacé de sorte que l'entrée d'air 2 ait un profil aérodynamique favorisant la phase de poussée. Ce déplacement peut être réalisé de manière active ou passive.

Grâce à l'invention, les performances du turboréacteur 1 sont significativement améliorées lors de la phase d'inversion de poussée tout en maintenant les performances existantes lors de la phase de poussée. En effet, l'organe de déviation 3, 4, 5 génère, en position déployée A, un décollement D du flux d'air inverse F-INV de la paroi intérieure 21 permettant d'orienter ledit flux d'air inverse F-INV dans une direction sensiblement axiale de sens opposé au flux d'air amont F, à l'origine de la phase d'inversion de poussée, tout en générant un poids et une traînée réduits. En position escamotée B, l'entrée d'air 2 conserve avantageusement son profil aérodynamique.

## Revendications

1. Turboréacteur (1) d'aéronef s'étendant selon un axe X orienté de l'amont vers l'aval dans lequel circule un flux d'air intérieur (F-INT) de l'amont vers l'aval lors d'une phase de poussée et un flux d'air inverse (F-INV) de l'aval vers l'amont lors d'une phase d'inversion de poussée, ledit turboréacteur (1) comportant une soufflante (11) configurée pour fournir une poussée inverse et une nacelle comportant une entrée d'air (2), l'entrée d'air (2) s'étendant de manière circonférentielle autour de l'axe X et comprenant une paroi intérieure (21) tournée vers l'axe X et configurée pour guider le flux d'air intérieur (F-INT) et le flux d'air inverse (F-INV) et une paroi extérieure (22), opposée à la paroi intérieure (21) et configurée pour guider un flux d'air extérieur (F-EXT), la paroi intérieure (21) et la paroi extérieure (22) étant reliées entre elles par une lèvre d'entrée d'air (23) de manière à former une cavité annulaire (20), l'entrée d'air comprenant un dispositif de déviation comprenant au moins un organe de déviation (3, 4, 5) monté mobile entre une position déployée (A), dans laquelle l'organe de déviation (3, 4, 5) s'étend en saillie de la paroi intérieure (21) ou de la lèvre d'entrée d'air (23) selon une direction de déploiement (X3, X4) radialement intérieure tournée vers l'axe X ou une direction de déploiement (X5) longitudinale par rapport à l'axe X, afin de permettre un décollement (D) du flux d'air inverse (F-INV) de la paroi intérieure (21) pour favoriser la phase d'inversion de poussée, et une position escamotée (B), dans laquelle l'entrée d'air (2) possède un profil aérodynamique de manière à guider le flux d'air intérieur (F-INT) sur la paroi intérieure (21) pour favoriser la phase de poussée.

2. Turboréacteur (1) selon la revendication 1, dans lequel la direction de déploiement (X3, X4, X5) est orientée vers l'amont.

3. Turboréacteur (1) selon l'une des revendications 1 et 2, dans lequel, la cavité annulaire (20) s'étendant suivant une direction longitudinale (X20) sensiblement parallèle à l'axe X et la direction de déploiement (X3, X4) formant un angle de déploiement (α) par rapport à la direction longitudinale (X20), l'angle de déploiement (α) est compris entre 90° et 140°.

4. Turboréacteur (1) selon l'une des revendications 1 à 3, dans lequel le dispositif de déviation comprend une pluralité d'organes de déviation (3, 4, 5) répartis à la circonférence de l'entrée d'air (2) autour de l'axe X.

5. Turboréacteur (1) selon l'une des revendications 1 à 4, dans lequel le dispositif de déviation comprend au moins une rangée comprenant une pluralité d'organes de déviation (3, 4, 5) à une même distance radiale par rapport à l'axe X.

6. Turboréacteur (1) selon l'une des revendications 1 à 3, dans lequel le dispositif de déviation comprend un unique organe de déviation (3, 4, 5) s'étendant de manière circonférentielle autour de l'axe X.

7. Turboréacteur (1) selon l'une des revendications 1 à 6, dans lequel au moins un organe de déviation (3) est articulé en rotation entre la position déployée (A) et la position escamotée (B).

8. Turboréacteur (1) selon l'une des revendications 1 à 6, dans lequel au moins un organe de déviation (4, 5) est monté mobile en translation selon la direction de déploiement (X3, X4, X5) entre la position déployée (A) et la position escamotée (B).

9. Turboréacteur (1) selon l'une des revendications 1 à 8, dans lequel le dispositif de déviation comprend au moins un organe de déplacement actif commandable (33, 43, 53) afin de déplacer l'organe de déviation (3, 4, 5) de la position escamotée (B) à la position déployée (A).

10. Turboréacteur (1) selon l'une des revendications 1 à 9, dans lequel le dispositif de déviation comprend au moins un organe de déplacement passif (34) configuré pour déplacer l'organe de déviation (3) de la position escamotée (B) à la position déployée (A) sous l'action du flux d'air inverse (F-INV).

11. Turboréacteur (1) selon l'une des revendications 1 à 10, dans lequel le dispositif de déviation comprend un organe de couverture (44) monté mobile entre une position couverte (C1), dans laquelle ledit organe de couverture (44) recouvre l'organe de déviation (4) en position escamotée (B) de manière à assurer un profil aérodynamique, et une position découverte (C2), dans laquelle ledit organe de couverture (44) est décalé de sa position couverte (C1) afin que l'organe de déviation (4) soit en position déployée (A).

12. Procédé d'utilisation d'un turboréacteur (1), selon l'une des revendications 1 à 11, dans lequel au moins un organe de déviation (3, 4, 5) est en position escamotée (B) lors d'une phase de poussée du turboréacteur (1), afin que l'entrée d'air (2) possède un profil aérodynamique de manière à guider le flux d'air intérieur (F-INT) sur la paroi intérieure (21), le procédé comportant, lors d'une phase d'inversion de poussée dudit turboréacteur (1), une étape de déplacement de l'organe de déviation (3, 4, 5) en position déployée (A) afin que ledit organe de déviation (3, 4 ,5) s'étende en saillie de la paroi intérieure (21) ou de la lèvre d'entrée d'air (23) selon une direction de déploiement (X3, X4) radialement intérieure tournée vers l'axe X ou une direction de déploiement (X5) longitudinale par rapport à l'axe X, afin de permettre un décollement (D) du flux d'air inverse (F-INV) de la paroi intérieure (21) pour favoriser la phase d'inversion de poussée.

## Patentansprüche

1. Turbotriebwerk (1) eines Luftfahrzeugs, das sich in einer Achse X erstreckt, die von vorn nach hinten ausgerichtet ist, in dem ein innerer Luftstrom (F-INT) von vorn nach hinten bei einer Schubphase und ein umgekehrter Luftstrom (F-INV) von hinten nach vorn bei einer Schubumkehrphase zirkuliert, wobei das Turbotriebwerk (1) ein Gebläse (11) aufweist, das ausgelegt ist, um einen umgekehrten Schub zu liefern und eine Gondel, die einen Lufteinlass (2) aufweist, wobei sich der Lufteinlass (2) umfangmäßig um die Achse X erstreckt und eine Innenwand (21) umfasst, die zur Achse X zeigt und ausgelegt ist, um den inneren Luftstrom (F-INT) und den umgekehrten Luftstrom (F-INV) zu lenken, und eine Außenwand (22), die der Innenwand (21) gegenüberliegt und ausgelegt ist, um einen äußeren Luftstrom (F-EXT) zu lenken, wobei die Innenwand (21) und die Außenwand (22) durch eine Lufteinlasslippe (23) derart miteinander verbunden sind, dass ein ringförmiger Hohlraum (20) gebildet wird, wobei der Lufteinlass eine Ablenkvorrichtung umfasst, die mindestens ein Ablenkorgan (3, 4, 5) umfasst, das zwischen einer ausgeklappten Position (A), in welcher sich das Ablenkorgan (3, 4, 5) aus der Innenwand (21) oder der Lufteinlasslippe (23) in einer radial inneren Ausklapprichtung (X3, X4), die zur Achse X zeigt, oder einer Längsausklapprichtung (X5) im Verhältnis zur Achse X hervorstehend erstreckt, um eine Ablösung (D) des umgekehrten Luftstroms (F-INV) von der Innenwand (21) zu gestatten, um die Schubumkehrphase zu begünstigen, und einer eingeklappten Position (B), in welcher der Lufteinlass (2) ein aerodynamisches Profil besitzt, so dass der innere Luftstrom (F-INT) über die Innenwand (21) geführt wird, um die Schubphase zu begünstigen, beweglich angebracht ist.

2. Turbotriebwerk (1) nach Anspruch 1, wobei die Ausklapprichtung (X3, X4, X5) nach vorn ausgerichtet ist.

3. Turbotriebwerk (1) nach einem der Ansprüche 1 und 2, wobei, wobei sich der ringförmige Hohlraum (20) in einer Längsrichtung (X20) etwa parallel zur Achse X erstreckt und die Ausklapprichtung (X3, X4) einen Ausklappwinkel (α) im Verhältnis zur Längsrichtung (X20) bildet, der Ausklappwinkel (α) zwischen 90° und 140° liegt.

4. Turbotriebwerk (1) nach einem der Ansprüche 1 bis 3, wobei die Ablenkvorrichtung eine Vielzahl von Ablenkorganen (3, 4, 5) umfasst, die am Umfang des Lufteinlasses (2) um die Achse X verteilt sind.

5. Turbotriebwerk (1) nach einem der Ansprüche 1 bis 4, wobei die Ablenkvorrichtung mindestens eine Reihe umfasst, die eine Vielzahl von Ablenkorganen (3, 4, 5) in demselben radialen Abstand im Verhältnis zur Achse X umfasst.

6. Turbotriebwerk (1) nach einem der Ansprüche 1 bis 3, wobei die Ablenkvorrichtung ein einziges Ablenkorgan (3, 4, 5) umfasst, dass sich umfangmäßig um die Achse X erstreckt.

7. Turbotriebwerk (1) nach einem der Ansprüche 1 bis 6, wobei mindestens ein Ablenkorgan (3) zwischen der ausgeklappten Position (A) und der eingeklappten Position (B) rotatorisch angelenkt ist.

8. Turbotriebwerk (1) nach einem der Ansprüche 1 bis 6, wobei mindestens ein Ablenkorgan (4, 5) in der Ausklapprichtung (X3, X4, X5) zwischen der ausgeklappten Position (A) und der eingeklappten Position (B) translatorisch beweglich angebracht ist.

9. Turbotriebwerk (1) nach einem der Ansprüche 1 bis 8, wobei die Ablenkvorrichtung mindestens ein steuerbares Organ zur aktiven Verlagerung (33, 43, 53) umfasst, um das Ablenkorgan (3, 4, 5) aus der eingeklappten Position (B) in die ausgeklappte Position (A) zu verlagern.

10. Turbotriebwerk (1) nach einem der Ansprüche 1 bis 9, wobei die Ablenkvorrichtung mindestens ein Organ zur passiven Verlagerung (34) umfasst, das ausgelegt ist, um das Ablenkorgan (3) unter der Wirkung des umgekehrten Luftstroms (F-INV) aus der eingeklappten Position (B) in die ausgeklappte Position (A) zu verlagern.

11. Turbotriebwerk (1) nach einem der Ansprüche 1 bis 10, wobei die Ablenkvorrichtung ein Abdeckorgan (44) umfasst, das zwischen einer Abdeckposition (C1), in welcher das Abdeckorgan (44) das Ablenkorgan (4) in eingeklappter Position (B) derart abdeckt, dass ein aerodynamisches Profil gewährleistet ist, und einer Aufdeckposition (C2), in welcher das Abdeckorgan (44) aus seiner Abdeckposition (C1) versetzt ist, damit das Ablenkorgan (4) in ausgeklappter Position (A) ist, beweglich angebracht ist.

12. Verfahren zur Verwendung eines Turbotriebwerks (1), nach einem der Ansprüche 1 bis 11, wobei mindestens ein Ablenkorgan (3, 4, 5) in eingeklappter Position (B) bei einer Schubphase des Turbotriebwerks (1) ist, damit der Lufteinlass (2) ein aerodynamisches Profil besitzt, so dass der innere Luftstrom (F-INT) über die Innenwand (21) geführt wird, wobei das Verfahren bei einer Schubumkehrphase des Turbotriebwerks (1) einen Verlagerungsschritt des Ablenkorgans (3, 4, 5) in ausgeklappte Position (A) aufweist, damit sich das Ablenkorgan (3, 4, 5) von der Innenwand (21) oder der Lufteinlasslippe (23) in einer radial inneren Ausklapprichtung (X3, X4), die zur Achse X zeigt, oder einer Längsausklapprichtung (X5) im Verhältnis zur Achse X hervorstehend erstreckt, um eine Ablösung (D) des umgekehrten Luftstroms (F-INV) von der Innenwand (21) zu gestatten, um die Schubumkehrphase zu begünstigen.

## Claims

1. Aircraft turbojet engine (1) extending along an axis X oriented from upstream to downstream in which an internal air flow (F-INT) circulates from upstream to downstream during a thrust phase and a reverse air flow (F-INV) from downstream to upstream during a thrust reversal phase, said turbojet engine (1) comprising a fan (11) configured to provide reverse thrust and a nacelle comprising an air intake (2), the air intake (2) circumferentially extending about axis X and comprising an internal wall (21) pointing to axis X and configured to guide the internal air flow (F-INT) and the reverse air flow (F-INV), and an external wall (22) opposite to the internal wall (21) and configured to guide an external air flow (F-EXT), the internal wall (21) and the external wall (22) being connected to each other by an air intake lip (23) so as to form an annular cavity (20), the air intake comprising a deflection device comprising at least one deflection member (3, 4, 5) movably mounted between an extended position (A), in which the deflection member (3, 4, 5) projectingly extends from the internal wall (21) or from the air intake lip (23) in a radially internal extension direction (X3, X4) pointing to axis X or a longitudinal extension direction (X5) relative to axis X in order to allow a separation (D) of the reverse air flow (F-INV) from the internal wall (21) to promote the thrust reversal phase, and a retracted position (B), in which the air intake (2) has an aerodynamic profile so as to guide the internal air flow (F-INT) onto the internal wall (21) to promote the thrust phase.

2. The turbojet engine (1) according to claim 1, wherein the extension direction (X3, X4, X5) is oriented upstream.

3. The turbojet engine (1) according to one of claims 1 and 2, wherein, with the annular cavity (20) extending along a longitudinal direction (X20) substantially parallel to axis X and the extension direction (X3, X4) forming an extension angle (a) with respect to the longitudinal direction (X20), the extension angle (a) is between 90° and 140°.

4. The turbojet engine (1) according to any of claims 1 to 3, wherein the deflection device comprises a plurality of deflection members (3, 4, 5) distributed at the circumference of the air intake (2) about axis X.

5. The turbojet engine (1) according to any of claims 1 to 4, wherein the deflection device comprises at least one row comprising a plurality of deflection members (3, 4, 5) at a same radial distance from axis X.

6. The turbojet engine (1) according to any of claims 1 to 3, wherein the deflection device comprises a single deflection member (3, 4, 5) circumferentially extending about axis X.

7. The turbojet engine (1) according to any of claims 1 to 6, wherein at least one deflection member (3) is rotatably hinged between the extended position (A) and the retracted position (B).

8. The turbojet engine (1) according to one of claims 1 to 6, wherein at least one deflection member (4, 5) is translationally mounted along the extension direction (X3, X4, X5) between the extended position (A) and the retracted position (B).

9. The turbojet engine (1) according to any of claims 1 to 8, wherein the deflection device comprises at least one controllable active moving member (33, 43, 53) in order to move the deflection member (3, 4, 5) from the retracted position (B) to the extended position (A) .

10. The turbojet engine (1) according to any of claims 1 to 9, wherein the deflection device comprises at least one passive moving member (34) configured to move the deflection member (3) from the retracted position (B) to the extended position (A) under the action of the reverse air flow (F-INV).

11. The turbojet engine (1) according to any of claims 1 to 10, wherein the deflection device comprises a cover member (44) movably mounted between a covered position (C1), in which said cover member (44) covers the deflection member (4) in the retracted position (B) so as to provide an aerodynamic profile, and an uncovered position (C2), in which said cover member (44) is offset from its covered position (C1) so as to bring the deflection member (4) to the extended position (A).

12. Method for operating a turbojet engine (1), according to one of claims 1 to 11, wherein at least one deflection member (3, 4, 5) is in the retracted position (B) during a thrust phase of the turbojet engine (1), so that the air intake (2) has an aerodynamic profile so as to guide the internal air flow (F-INT) onto the internal wall (21), the method comprising, during a thrust reversal phase of said turbojet (1), a step of moving the deflection member (3, 4, 5) into an extended position (A) so that said deflection member (3, 4, 5) projectingly extends from the internal wall (21) or from the air intake lip (23) along a radially internal extension direction (X3, X4) pointing to axis X or a longitudinal extension direction (X5) relative to axis X, in order to allow separation (D) of the reverse air flow (F-INV) from the internal wall (21) to promote the thrust reversal phase.
